Europäisches Patentamt

European Patent Office

Office européen des brevets

(11) Publication number: **0 188 471**
**B1**

# (12) EUROPEAN PATENT SPECIFICATION

(45) Date of publication of patent specification: **29.11.89**

(21) Application number: **85903249.2**

(22) Date of filing: **18.06.85**

(86) International application number:
**PCT/EP85/00294**

(87) International publication number:
**WO 86/00291 16.01.86 Gazette 86/02**

(51) Int. Cl.⁴: **C 04 B 28/00, C 04 B 24/06, C 04 B 24/18, C 04 B 24/38**

(54) ADMIXTURE FOR CEMENT MIXES.

(30) Priority: **20.06.84 JP 125353/84**
**03.10.84 US 657307**

(43) Date of publication of application:
**30.07.86 Bulletin 86/31**

(45) Publication of the grant of the patent:
**29.11.89 Bulletin 89/48**

(84) Designated Contracting States:
**BE CH DE FR GB IT LI SE**

(56) References cited:
FR-A-1 502 387
FR-A-1 543 999
FR-A-2 085 402
FR-A-2 114 734
FR-A-2 154 035
GB-A-2 040 907
GB-A-2 083 015
GB-A-2 114 985

Kirk-Othmer "Encycl.of Chem.Technology", 3rd Edition, vol.10, J.Wiley &Sons, N.Y., pages 496-512

(73) Proprietor: **SANDOZ AG**
**Lichtstrasse 35**
**CH-4002 Basel (CH)**
(84) **BE CH FR**

(73) Proprietor: **SANDOZ-PATENT-GMBH**
**Humboldtstrasse 3**
**D-7850 Lörrach (DE)**
(84) **DE**

(72) Inventor: **KOZAKURA, Teruo Nisso Master Builders Apt. B**
**No. 503 2722, Hagizono, Chigasaki-shi Kanagawa-ken (JP)**
Inventor: **OHTA, Akira Nisso Master Builders Apt. B**
**No. 103 2722 Hagizono, Chigasaki-shi Kanagawa-ken (JP)**
Inventor: **NEMOTO, Tohru Nisso Master Builders Apt. B**
**No. 107 2722, Hagizono, Chigasaki-shi Kanagawa-ken (JP)**
Inventor: **SHIMIZU, Tetsuij Nakayama Cho-Midori-ku**
**Yokohama-shi Kanagawa-ken (JP)**

Courier Press, Leamington Spa, England.

**EP 0 188 471 B1**

Inventor: SPROUTS, Sandra, R.
7318 Lamson
Oakwood Village, OH 44146 (US)
Inventor: MOORE, Richard, H.
10110 Parkview Avenue
Garfield Heights, OH 44125 (US)

**Description**

The invention relates to aggregate-containing cement mixes (such as grouts, mortars and concrete) for use in construction and for cementing brick, cement block, stucco and even ceramic tiles.

From GB—A—2114985 cement admixtures are known, containing water-reducing agents like lignosulphonates and polysaccharides as well as polyacrylates of high molecular weight as flocculating agents. From FR—A—2154035 the use of methylcellulose as flocculating agent is known.

According to the invention there is provided a cement mix comprising:

a) hydraulic cement;

b) as flocculating agent, 0.01—0.5% of hydroxypropyl methylcellulose;

c) as water reducing agents, 0.1—2% of a lignosulphonate or modified lignosulphonate and 0.35—0.6% sodium gluconate;

d) 200—800% of aggregate; and

e) 25—65% water.

All percentages in this specification are percentages by weight based on the dry weight of cement, unless otherwise stated.

Preferred lignosulphonates are selected from sodium or calcium lignosulphonate and alkali-treated or ultra-filtered modified lignosulphonates.

The amount of flocculating agent used is preferably dependent on its molecular weight. Where the molecular weight is at the higher end of the range (e.g. molecular weight of approximately 140,000) the more preferred amount of flocculating agent used is 0.01 to 0.1%, most preferably 0.03 to 0.1%. Where the molecular weight is at the lower end of the range (e.g. a molecular weight of approximately 15—20,000) more preferably the amount of flocculating agent used is 0.10 to 0.4%, most preferably 0.1 to 0.3%.

The amount of water reducing agent varies depending on the efficiency of the water reducing agent and the amount needed to compensate for loss in fluidity properties due to the flocculating agent. Preferably the amount of water reducing agent present is 0.2 to 1.3%, more preferably 0.2 to 1.0%.

Preferably aggregate includes one or more of the following; natural silica sand, manufactured or processed sand, blast furnace slag, masonry sand, crushed stone, gravel and any other coarse aggregate. The amount of aggregate present is 200 to 800%. Where the aggregate is fine aggregate the preferred amount is 200 to 600% and where the aggregate is fine and coarse aggregate the preferred range is 400 to 800%. In concrete generally at least 40% of the aggregate is fine aggregate.

Preferably the amount of water present is 30 to 60%, most preferably 35 to 55%.

In cement mixes according to the invention the hydraulic cement preferably comprises 10 to 30%, more preferably 15 to 25% of the total weight of cement mix.

Hydraulic cement includes portland cements, blended cements, high alumina cements and pozzolanic cements. Portland cement comprises tricalcium silicate (alite), dicalcium silicate (belite), tricalcium aluminate and tetracalcium alumina ferrite. Further minor components include sodium and potassium oxides and magnesium oxide. Calcium sulphate may also be ground into the cement. Blended cements are those containing cement and finely divided blast-furnace slag and/or fly ash.

The flocculating agent and water reducing agent can be worked simultaneously or singly at any stage into the cement mixture and before or after any other cement admixtures have been added.

Loss in fluidity in concrete is measured by slump loss. Slump is a measure of how much a given height of a conical cement specimen will drop from its original height when no longer constrained by the mould of a slump cone. A slump cone is standardized at 30.6 cms. Therefore, a cement mix with a slump of 20 cms means that the mix has settled to about 1/3 of its original height. Slump loss is a measure of how much slump diminishes on standing for a given time.

Loss in fluidity for mortars and grouts may be measured by the known vibration drop table test for spreading loss which is analogous to the slump test.

One advantage of the invention is that fluid loss can effectively be reduced and fluidity is maintained at roughly the same level for a long period of time. In the case of concrete it has been found that there is practically no slump loss for approximately 1 hour after combined addition of the flocculating agent and the water reducing agent. Further, there is no need to increase the amount of water present to compensate for slump loss as was necessary in the past. (This increase caused the physical properties of the concrete to be impaired). Further, the physical properties of the concrete will be improved by the addition of the water reducing agent and the flocculating agent, for instance the resistance of concrete to segregation will be increased and the rheological characteristics and pumpability will be increased.

In the past there has been a tendency to avoid adding a high molecular weight flocculating agent to a cement mix, especially concrete, since fluidity would generaly be greatly reduced. Further, where a water reducing agent alone has been added, although the fludity of the cement mix is increased immediately after addition, it has rapidly deteriorated.

A preferred type of cement mix according to the invention is a mortar, that is, a mix containing only fine aggregate and in which up to 80% of lime is also present. In such a mortar, the water reducing agent comprises at least one water reducing agent selected from lignosulphonates and modified lignosulphonates, and at least one water reducing agent selected from polyhydroxy carboxylic acids and salts thereof (preferably sodium gluconate).

3

Furthermore, the mortar preferably further contains

f) an anionic surfactant selected from olefin sulphonates and alkyl benzene sulphonates.

In a mortar according to the invention the amount of water soluble cellulose ether present is 0.02 to 0.07%, and preferred amounts of lignosulphonate, gluconate and anionic surfactant (f) are 0.10 to 0.20%, 0.35 to 0.6% and 0.001 to 0.008%, respectively.

In a mortar according to the invention the lignosulphonate is preferably sodium lignosulphonate, and the olefin sulphonate is preferably a sodium α-olefin sulphonate. More preferably the olefin sulphonate is a $C_{12-18}$ olefin sulphonate. By the term α-olefin sulphonate is meant a compound having a double bond at the end of the molecule i.e. at the α-position and such olefins are usually obtained by cracking a petroleum fraction or by polymerisation of ethylene.

The above described mortars may be premixed mortars which may be delivered and stored at construction sites for as long as 72 hours after the initial mix has been added. The mortars according to the invention have good storage ability and in particular the additives retard the hydration of the mortar during mixing, transport and storage whilst not interfering with the properties needed to utilise the mortar as a cement binding mix. The mortars of the invention remain usable for as long as 72 hours without the need to retemper or extensively remix. The mortars of the invention have excellent adhesive properties to brick or block, adsorption of water from mix onto the porous surface of building units is uniform, air content is stable and strength needed to support loads placed on it is adequate.

The invention will be illustrated by the following Examples.

All mortar proportions by volume for Example Nos. 1 to 3 are determined in accordance with ASTM Designation C 270—80-Standard Specification to Mortar for Unit Masonry Mortar Types.

Example 1 to 3

A mortar mix is made up containing 898 g of Type 1 Portland cement, 100 g of masonary lime, 2840 g of masonry sand with a measured fineness modulus of 1.81 in half the required water for each example in a paddle type Hobart mixer.

An admixture comprising 0.52% sodium gluconate, 0.175% sodium lignosulphonate, 0.07% hydroxypropyl methycellulose and 0.008% α-olefin sulphonate (all percentages are based on dry cement present in the combined mortar mix) is made up. The admixture is added to the mortar mix and additional water is added until the desired workability is achieved. The total amount of water present is about 540 g. The hydroxypropyl methylcellulose has a molecular weight of about 120,000, and the lignosulphonate a molecular weight of 2000.

The water to cement ratios are used as given in Table 1 below.

TABLE No. 1

|  | Example 1 | Example 2 | Example 3 |
|---|---|---|---|
| Water: cement ratio | 0.59 | 0.50 | 0.55 |
| Air content% by volume[1] | 24.00 | 21.70 | 17.50 |
| Flow%[2] | 125 | 98 | 115 |
| Cone penetration[3] | 68 | 58 | 43 |
| Adhesion (brick) | good | good | good |
| Adhesion (block) | good | good | good |
| Scratch resistance | good | good | good |
| Workability | good | good | good |
| Cohesiveness | good | good | good |
| Consistency (48 hours after mixing) | pliable | pliable | pliable |

[1] ASTM Designation C 185-80 Standard Test Method for Air Content of Hydraulic Cement Mortar.
[2] ASTM Designation C 102-00 Standard Test Method for Compressive Strength of Hydraulic Cement Mortars.
[3] ASTM Designation: C 472-79 Standard Methods for Physical Testing of Gypsum Plasters and Gypsum Concrete.

Comparative Examples A and B

These examples comprise a mortar mix containing approximatley 0.3% water (based on the dry weight of cement), 898 g of Type 1 Portland Cement, 100 g of masonry lime and 2840 g of masonry sand with a measured fineness of 1.81 in half the required water in a paddle type Hobart mixer. The appropriate admixture given in Table 2 below, is then added.

# EP 0 188 471 B1

TABLE 2

| | Amount of lignosulphonate | Amount of sodium gluconate |
|---|---|---|
| Example A | — | 0.52% |
| Example B | 0.175% | — |

The properties of these mixes are given in Table 3 below.

TABLE 3

| | Example A | Example B |
|---|---|---|
| Water: cement ratio | 0.59 | 0.59 |
| Air content% by volume | 7.40 | 8.20 |
| Flow% | 114 | 103 |
| Cone penetration | 30 | 36 |
| Adhesion (Brick) | Poor | None |
| Adhesion (Block) | Poor | None |
| Scratch resistance | Fair | Good |
| Workability | Poor | Poor |
| Cohesiveness | Poor | None |
| Consistency 48 hours after mixing | Dry | Hard |

## Claims

1. A cement mix comprising:
a) hydraulic cement
c) 0.1—2% of a lignosulphonate or modified lignosulphonate and 0.35—0.6% sodium gluconate
d) 200—800% of aggregate; and
e) 25—65% water,
characterised in that it further contains
b) 0.01—0.5% of hydroxypropyl methylcellulose, all percentages being by weight based on the dry weight of component a).

2. A mortar according to Claim 1 in which component d) is fine aggregate and up to 80% of lime is additionally present.

3. A mortar according to Claim 1, further containing f) an anionic surfactant selected from olefin sulphonates and alkylbenzene sulphonates.

4. A mortar according to Claim 3 comprising:
a) hydraulic cement
b) 0.02—0.07 hydroxypropyl methylcellulose
c) 0.1—0.2% sodium lignosulphonate and 0.35—0.6% sodium gluconate
d) 200—600% fine aggregate
e) 30—60% water and
f) 0.001—0.008% sodium α-olefin sulphonate.

## Patentansprüche

1. Eine Zementmischung, enthaltend:
a) hydraulischen Zement
c) 0,1—2% eines Lignonsulfonats oder eines modifizierten Lignosulfonats und 0,35—0,6% Natriumglukonat
d) 200—800% Aggregat; und
e) 25—65% Wasser,
dadurch gekennzeichnet, dass sie weiter enthält
b) 0,01—0,5% Hydroxypropylmethylcellulose, wobei alle Prozentangaben Gewichtsprozent sind und sich auf das Trockengewicht der Komponente a) beziehen.

2. Ein Mörtel gemäss Anspruch 1, worin die Komponente d) ein fines Aggregat ist und zusätzlich bis zu 80% Kalk enthält.

3. Ein Mörtel gemäss Anspruch 1, der weiter
f) ein anionisches Tensid aus der Gruppe von Olefinsulfonaten und Alkybenzolsulfonaten enthält.

4. Ein Mörtel gemäss Anspruch 3, enthaltend:
a) hydraulischen Zement

# EP 0 188 471 B1

b) 0,02—0,07% Hydroxypropylmethylcellulose
c) 0,1—0,2% Natriumlignosulfonat und 0,35—0,6% Natriumglukonat
d) 200—600% fines Aggregat
e) 30—60% Wasser und
f) 0,001—0,008% Natrium-α-olefinsulfonat.

**Revendications**

1. Une gâchée de ciment comprenant
a) un ciment hydraulique,
c) de 0,1 à 2% d'un lignosulfonate ou d'un lignosulfonate modifié et de 0,35 à 0,6% de gluconate de sodium,
d) de 200 à 800% d'un agrégat et
e) de 25 à 65% d'eau,
caractérisée en ce qu'elle contient en outre
b) de 0,01 à 0,5% d'hydroxypropylméthylcellulose, tous les pourcentages étant en poids par rapport au poids du composant a) à l'état sec.

2. Un mortier selon la revendication 1, dans lequel le composant d) est un agrégat fin et jusqu'à 80% de chaux sont en outre présents.

3. Un mortier selon la revendication 1, contenant en outre f) un tenion-actif anionique choisi parmi les oléfine-sulfonates et les alkylbenzène-sulfonates.

4. Un mortier selon la revendication 3, comprenant:
a) un ciment hydraulique
b) de 0,02 à 0,07% d'hydroxypropyl-méthylcellulose,
c) de 0,1 à 0,2% de lignosulfonate de sodium et de 0,35 à 0,6% de gluconate de sodium,
d) de 200 à 600% d'agrégat fin,
e) de 30 à 60% d'eau et
f) de 0,001 à 0,008% d'α-oléfine-sulfonate de sodium.

6